# EUROPEAN PATENT SPECIFICATION

(11) **EP 2 869 220 B1**
(45) Date of publication and mention of the grant of the patent: **17.07.2019**
(21) Application number: 14190178.5
(22) Date of filing: 23.10.2014
(51) Int. Cl.: G06F 16/27, G06F 16/28

(54) **NETWORKED DATABASE SYSTEM**
VERNETZTES DATENBANKSYSTEM
SYSTÈME DE BASE DE DONNÉES EN RÉSEAU

(30) Priority: 30.10.2013 US 201314067187
(43) Date of publication of application: 06.05.2015
(73) Proprietor: SAP SE, 69190 Walldorf (DE)
(72) Inventor: Kemmler, Andreas, 69190 Walldorf (DE); Kamenz, Torsten, 69190 Walldorf (DE)
(74) Representative: Richardt Patentanwälte PartG mbB

(56) References cited:
- EP-A1- 2 040 180
- EP-A2- 1 241 593
- EP-A2- 1 376 989
- US-A1- 2013 173 539
- Anonymous: "How To... Realize Cross System Reporting Using SAP HANA Live Content Database & Technology SAP HANA Appliance", , 1 June 2013 (2013-06-01), pages 1-50, XP055170697, Retrieved from the Internet: URL:http://paperzz.com/doc/1287046/how-to. ..-realize-cross-system-reporting-using-sa p-hana-live [retrieved on 2015-02-19]

## Description

### Field of the invention

The present disclosure relates to a networked database system configured to generate a report.

### Background and related art

A company more than likely has a need to, and indeed does, generate a multitude of reports about its workflow processes and operations relating to several topics such as manufacturing control, process monitoring and optimization, human resources, fleet management, etc. The company may use different systems and/or sub-systems in generating these reports, including different processors, databases, and other computer system components. The different systems may comprise legacy systems and differ significantly in respect to their age, complexity, runtime environment and data organization. Creating reports for two or more or even all system components may require complex manual modifications of a query interface by multiple system designers and programmers being familiar with the particularities of each individual sub-system and implementing special program routines for integrating data provided by different subsets of the legacy computer systems.

The document "How To ... Realize Cross System Reporting Using SAP HANA Live Content" retrieved from the Internet under URL http://paperzz.com/doc/1287046/how-to...-realize-cross-system-reporting-using-saphana-live on 2015-02-19 describes the working with SAP HANA Live for SAP Business Suite, thereby using the virtual data model, which relates to the delivery of calculation views that are imported into SAP HNA upon installation of the SAP HANA Live content package.

EP 1241593 A2 describes a method and system for interacting with devices having different capabilities. Server-side objects are used to translate information and commands to and from various formats depending on the requirements and capabilities of the target device. A device interaction component transforms a menu in a manner appropriate to the device the user is using.

### Summary

It is an objective of the present invention to provide for an improved system and corresponding method and computer program product for generating a report as specified in the independent claims. Embodiments of the invention are given in the dependent claims. Embodiments of the present invention can be freely combined with each other if they are not mutually exclusive.

In one aspect, the invention relates to a networked database system. The networked database system comprises a computer processor, an in-memory database and a network interface for coupling the in-memory database to a plurality of computer systems via a telecommunication network. Each of said computer systems comprises a source database.

The networked database system further comprises a configuration. The configuration comprises a selection of one or more of the source databases. Each of the source databases selected in the configuration has assigned a database schema. Each schema is indicative of how the data contained in said source database is organized.
The networked database system further comprises an interface to a portable battery powered telecommunication device of a user. The interface enables the user to modify the selection in the configuration.

The in-memory database comprises, for each of the source databases, a database view being associated with said source database. Each database view comprises program logic configured to create a report for said source database in response to being called. The creation of the report comprises retrieving data from at least one database table, the at least one database table being stored in said source database and/or being stored in the in-memory database as a copy of a database table of said source database.

The processor is configured for:
- automatically evaluating the configuration for identifying two or more of the selected source databases sharing a common database schema;
- automatically identifying at least one of the database views configured for retrieving data from one of the source databases identified in said evaluation and being already contained in the in-memory database at the moment of evaluation;
- automatically identifying one or more of the source databases identified in said evaluation for which the in-memory database lacks a respective database view configured for retrieving data from said source database;
- automatically creating the database views configured for retrieving data from said one or more identified source databases by:
   ▪ creating a copy of the program logic of the at least one identified database view for each of the one or more identified source databases;
   ▪ modifying the created copies for causing the modified program logic to retrieve data from one of the one or more identified source databases;
- receiving a request for generating a cross-system report from the telecommunication device via a telecommunication network, the cross-system report comprising data stored across multiple ones of the source databases; the expression "being stored across multiple ones of the source databases" means that the data may originally be stored and may be dynamically retrieved from the source databases via the network or that the data of one or more of the source databases is replicated, before the processor receives the request, e.g. upon setting up the in-memory database, to the in-memory database; in any case the data was originally stored in one or more source databases;
- in response to receiving the request, evaluating the configuration for automatically creating a meta view, the meta view being a further database view and comprising program logic configured to create the cross-system report by:
   ∘ selectively calling, upon the meta view being called, the database views associated with the source databases selected in the configuration, thereby selectively retrieving data from said selected source databases, and
   ∘ combining, by executing a database operation provided by the in-memory database, the data retrieved by each of the called database views for providing the cross-system report;
- in response to receiving the request, automatically creating the meta view and calling the generated meta view for generating the cross-system report; and
- returning a response to the telecommunication device via the telecommunication network, the response comprising the generated cross-system report.

Said features may provide for a particularly flexible networked database system which may be capable of dynamically combining data for generating a cross-system report for a dynamically determined sub-set of source databases. As the meta-view may be created in response to the request and may be configured to call merely the sub-set of the available source databases selected by a user via the configuration, it is not necessary to implement specially adapted report-generating interfaces for generating different types of cross-system reports covering different subsets of the source databases. For example, the networked database system may be connected to source databases A, B, C, D, E and F. A first type of cross system report may cover source databases A, B and E while a second type of cross system report may cover B, C and D. In contrast to state of the art approaches, it is not necessary to implement a first interface specially adapted for generating the first type of cross system report covering A, B and E and a second interface specially adapted for generating the second type of cross system report covering B, C and D. Rather, the meta view may be dynamically created for generating a report that covers any possible sub-set of the source databases selected in the configuration. Any possible combination of source databases may be covered without having to implement a particularly adapted query interface in advance. Thus, the time and effort for providing and maintaining a reporting interface for complex and heterogeneous cross-system reports may greatly be facilitated. Changes in the structure of the source databases do not affect the creation of the cross-system report as the meta view does not directly access the database tables but rather calls database views being associated to the selected source databases. Thus, a highly flexible, distributed database system is provided whose coverage is dynamically adapted in accordance to a configuration.
That the data retrieved from the various source databases is combined by database operations provided by the in-memory database rather than an application layer logic may significantly increase the performance, because a) database operations are much more performant than application-layer data processing operations because database operations are optimized for efficiently processing the data stored in or organized by said in-memory database. And because b) only the data that is really needed in the report is retrieved from the database layer and transferred to the application layer. Thus, although the networked database system is highly flexibly adaptable in respect of the source databases to be covered by the report, embodiments of the invention may allow for a highly performant report generation basically relying only on inbuilt database operations provided by one or more database views.

Creating the database views by an automated copying and modification process may accelerate and facilitate the provision of the flexible reporting systems, in particular in environments where many source systems have the same structure.

According to embodiments, the processor is configured for evaluating the request of the telecommunication device for identifying an estimated display size of the telecommunication device. For example, the evaluation may comprise evaluating the device-type or size of the telecommunication device by evaluating some parameters specified in the request. Said parameters, e.g. a device-type ID or some settings in the operating system of the telecommunication device may be part of the request and may be used for automatically determining the size of the display of said device. The processor is further configured for automatically modifying the configuration. The larger the estimated display size, the larger the number of source databases selected in the modified configuration.
This may be advantageous, because display-size specific reports may be generated. For example, in case a request for a cross-system report on some consumables for a production line is received by the processor from a portable telecommunication device with a very small display, some source databases which may merely comprise some supplementary data, e.g. some background information on the supplier, may automatically be deselected in the configuration to reduce the size of the report and to allow displaying the whole report on the small display. The database server hosting the in-memory database may comprise some application program logic and/or rules for selecting or deselecting some of the source databases in the configuration in dependence on the display size and/or a device type. In case the request for a cross-system report on some consumables for a production line is received by the processor from a portable telecommunication device with a comparatively large display, e.g. a notebook, said supplementary source databases may automatically be selected in the configuration to include also said supplementary details in the cross-system report and to display them in the display.

According to embodiments, the telecommunication device is one of a plurality of telecommunication devices operatively coupled to the in-memory database via the telecommunication network. The configuration comprises, for each of the telecommunication devices, a specification of the one or more selected source databases associated with said telecommunication device. The processor may be configured for evaluating, upon receiving the request for a cross-system report from one of the telecommunication devices, the configuration for identifying the one or more selected source databases associated with a device type of said telecommunication device. Said association may be stored in the configuration. The processor may further be configured for using the identified selected source databases for creating a telecommunication-device type specific version of the meta view. The telecommunication device type specific version of the meta view is configured for retrieving data from at least one database table of each of said one or more identified and selected source databases, said source databases being assigned to said telecommunication device in the configuration. For example, the configuration may comprise different sets of selected source databases which are associated with a respective device type such as "smartphone" or "tabloid computer". When generating the meta view, only the selected source databases being assigned to the device type of the device from which the request was received are considered as data sources.

Providing a device-type specific configuration and a device-type specific meta-view may allow for the automated creation of a particular type of cross system report that is specially adapted to the particularities or capabilities of the respective device type. For example, a first device type may consist of a set of telecommunication devices assigned to a first user or a first user group. A second device type may consist of a set of telecommunication devices assigned to a second user or a second user group. Thus, also group- or user- specific sub-sets of source databases may automatically be selected and group- or user-specific reports comprising selectively the data required by said group or user may be generated automatically.

According to embodiments, the interface enables a user to modify the configuration such that multiple telecommunication devices have assigned the same list of selected source databases. The configuration may be modified automatically upon receiving the request for the cross-system view and the request may comprise configuration data or modifications thereof.

According to embodiments, each of one or more of the database views is a root node of a hierarchical graph of interconnected nodes. The interconnected nodes of each of said hierarchical graph comprise one or more of the database tables whose data is retrieved by the database view acting as the root node upon being called, and comprise one or more further database views. Each of said further database views is configured to retrieve data from one or more of said database tables of said hierarchical graph upon being called by another one of the further database views or by the root node view of said hierarchical graph. At least a first one of the hierarchical graphs comprises database tables respectively acting as a node of said first hierarchical graph. Said database tables are stored in the in-memory database and are created as a copy of database tables in one of the source databases. Each hierarchical graph may have received its tables from a respective one of the source databases.

At least a second one of the hierarchical graphs comprises database tables respectively acting as a node of said second hierarchical graph. Said database tables are stored in one of the source databases. No copies of said tables may have been stored in the in-memory database. The data retrieved from said database tables is retrieved by the processor via the telecommunication network. The calling of each of said database views by the meta view comprises calling the further database views of said hierarchical graph in a cascaded manner starting with the execution of the root node and returning the data retrieved from the database tables constituting nodes of said hierarchical graph. The hierarchical organization of further views and the database tables as described may allow the specification of a complex, cascaded data retrieval logic which is optimized to retrieve data, e.g. instances of a particular data model represented by said hierarchy, quickly, while at the same time providing for a simple-structured tabular interface (the root node in the form of a database view to be directly called by the meta view) for triggering the data retrieval. That data of some of the source databases may be received via a network in response to the request from said source databases while others may be retrieved from a local source database copy in the in-memory database may further increase the flexibility of the system: data which needs to reflect the most recent state of the data in the source database may be retrieved in response to the request dynamically while other data may be replicated only once or in predefined time intervals of e.g. days, month or years to reduce network traffic. The dynamic data retrieval from remote databases may be implemented, for example, by using "Smart Data Access" data virtualization technology of SAP HANA.

According to embodiments, each of the database views has assigned access permission information. The request for generating the cross-system report has assigned a user-ID or group-ID. The automatic creation of the meta view comprises evaluating the access permissions assigned to the database views associated with the one or more source databases selected in the configuration, and creating the meta view. The meta view is created such that the generated meta view is configured for selectively calling, upon said meta view being called, the database views associated with the one or more source databases selected in the configuration which have assigned access permission information indicating that a user having assigned said user-ID or group-ID is allowed to access said database view. The view-based access permission management may allow for a highly flexible and dynamically adaptable access permission management and thus may provide for a particularly flexible system for creating cross-system reports.

According to embodiments, the database operation is a SQL UNION operation.

According to embodiments, the creation of the meta view comprises automatically identifying, within each of the database views assigned to one of the source databases selected in the configuration, a database sub-query. Each database sub-query is configured to:
∘ retrieve data from one of the source databases hosted by one of the computer systems via the telecommunication network; or
∘ retrieve data from a copy of said one source database, said copy being stored in the in-memory database.
The creation of the meta view further comprises combining the identified sub-queries for generating a combined database query. The combined database query is part of the program logic of the meta view. Said program logic is configured for generating the cross-system report.

For example, a sub-query may be an SQL SELECT statement contained in the program logic of the database view, the database view being assigned to one of the source databases selected in the configuration.

As mentioned above, creating the database views by an automated copying and modification process may accelerate and facilitate the provision of the flexible reporting systems, in particular in environments where many source systems have the same structure.

For example, three source databases may have stored attributes of employees of a company. The three source databases may have the same database schema, e.g. a table "Employee" with three columns respectively having assigned the column names "ID", "name" and "salary". Columns of different source databases being contained in a table with the shared name "Employee" and sharing the same column name, e.g. "name" store the same type of attributes. For example, one source database may comprise the attributes of US-employees, another source database may comprise attributes of employees in Brazil and the third database may comprise the data of German employees. In such cases, only one single view for the data model "employee" needs to created manually, e.g. the view for reporting on the US-employees. All other views capable of generating a report for the other source databases comprising employee attributes can be created automatically by copying and modifying said single view of the US-employees. The modification may merely consist in a replacement of the name of the source database to be accessed and/or, in case a local (i.e., stored in the in-memory database) database copy is accessed, in a replacement of a table name prefix of a database table of the in-memory database, whereby the replaced table name prefix is indicative of the source database from which the data was replicated to the in-memory database. This may result in a great facilitation for creating cross-system reports e.g. for large international companies comprising departments and decentrally managed source databases in many countries. The processor may be capable of automatically determining the ones of the source databases having the same structure. For example, the configuration may comprise an association of each of the source databases and a database schema of said source database, the database schema being indicative of the structure of the tables and/or views of said source database.

According to embodiments, the automated identification of the two or more of the selected source databases sharing a common database schema comprises identifying all columns in the source databases selected in the configuration which have different column names but have stored attributes of the same semantic concept, and mapping said different column names to a shared column name for retrieving data from said selected source databases according to a common database schema, the common database schema comprising the shared column name.

For example, the configuration may comprise a table with the following columns:
A column "source" comprising an identifier and/or an address of one of the source databases. A column "table" comprising a table name of a table of a source database identified in the column "source". For example, said table could have the table name "Employee". The table of the configuration could comprise one or more further columns referred to e.g. as "Field1", "Field2", etc. respectively comprising column names like "ID", "Name" and/or "Salary", whereby said column names are the names of the columns of the source database table whose name is contained in the "Table" column. As can be seen in the example below, the same semantic content "Salary" may be stored in different source databases in columns of different names ("Income" or "Salary"). Each record of said table may be considered, alone or in combination with additional data (e.g. with mapping data exemplary specified in the next table) as a "schema" of the respective source database. The database schema may comprise the column names of respective columns of one or more of the tables of the source database and may comprise a mapping of column names representing the same semantic concept to each other. For example, the column name "Salary" of source database and corresponding computer system CS1 relates to the same semantic concept as "Income" of source database and corresponding computer system CS2 and as "Earning" of a further source database and corresponding source computer system.

| Source | Table | Field1 | Field2 | Field3 | Field4 | ... |
|---|---|---|---|---|---|---|
| CS1 | Employee | ID | Name | Salary | Gender | ... |
| CS2 | Employee | ID | Name | Income | - | ... |

| | | | | | | |
|---|---|---|---|---|---|---|
| ***DB-schema table**: a part of the configuration; specifies a database schema for a respective one of the source databases;* | | | | | | |

| Source | Matching column name 1 "Joining name" | Matching column name 2 | Matching column name 3 | ... |
|---|---|---|---|---|
| Semantic concept 1 | **Salary** | Income | Earning | ... |
| Semantic concept 2 | **ID** | Identifyer | | ... |

| | | | | |
|---|---|---|---|---|
| ***Semantic column-name mapping*:** *a part of the configuration specifying multiple database schemas of the source databases;* | | | | |

The mapping shown above may comprise multiple semantic concepts and one or more different column names of different source databases which are all mapped to said semantic concept and thus are specified to be synonyms.

In a first example, the configuration may specify that the cross-system report should solely cover data which is stored in database columns of a source database whose column names are identical or whose column names are mapped to each other as synonyms representing the same semantic concept. For example, the following database statement could be executed for creating the meta view in such a scenario:

```
 CREATE VIEW metaview1 AS (
     SELECT ID, Name, Salary from CS1.Employee
     UNION ALL
     SELECT ID, Name, Income as Salary from CS2.Employee
     )
```

The column name marked in the mapping as "joining name" may be used for returning "Salary" data also from tables having a column name "income" or "earnings".

In another example, the configuration may specify that the cross-system report should cover all data which is stored in database columns of a selected source database whose column names are contained in the database schema stored for said source database in the configuration. For example, the following database statement could be executed for creating the meta view in such a scenario:

```
 CREATE VIEW metaview2 AS (
     SELECT ID, Name, Salary, Gender from CS1.Employee
     UNION ALL
     SELECT ID, Name, Income as Salary, NULL as Gender from CS2.Employee
     ).
```

In this example, a default value, e.g. NULL may be included automatically when executing the created meta view. The default value may be included for all source databases lacking a column name that is present in at least one of the source databases selected in the configuration. For example, the column "gender" may be present in source database and corresponding source computer system CS1 but not in another source database hosted by computer system CS2. Nevertheless, the "gender" data will be included in the cross system report automatically by creating a meta view with the CREATE statement specified above for the metaviwe2.

According to embodiments, the copying process may comprise identifying a SELECT statement contained in the program logic of the at least one identified database view. Said copying process may further comprise replacing the name of one or more database tables and/or database columns of the source database from which data was retrieved by the at least one identified database view by one or more column and/or table names of another one of the source databases from which the copied database view shall retrieve data. For example, the identified SELECT statement may comprise the table name "CS1.Employee" for accessing a local copy of the table "Employee" having been replicated to the in-memory database from a first computer system CS1 hosting a first source database. The modified copy of the SELECT statement may comprise the table name "CS2.Employee" instead of "CS1.Employee" and thus may be used for retrieving data from a local copy of the "Employee" table having been replicated to the in-memory database from a second computer system CS2 hosting a second source database. "CS1" and "CS2" may act as table name prefixes. The syntax of said prefixes may depend on the in-memory DBMS used. In case the data is retrieved dynamically via a network, the modified copy of the view may comprise all data necessary to establish a database connection to said remote source database.

According to embodiments, each of the source databases selected in the configuration has assigned a database schema being indicative of how the data contained in said source database is organized. The processor is further configured for:
- automatically evaluating the configuration for identifying a first selected one of the source databases having assigned a first schema and a second selected one of the source databases having assigned a second schema, wherein the column names of the first schema is a sub-set of the column names of the second schema;
- automatically identifying column names of tables of the second source database which are contained in the second schema and which are absent from the first schema;
- automatically creating one of the database views configured for retrieving data from the second source database. Said one database view is created by automatically creating a copy of the database view configured for retrieving data from said identified first source database; and by automatically modifying said copy for causing the modified program logic to retrieve data from the second source database or from a local copy thereof. The automated modifying comprises supplementing the program logic of the copied database view with SELECT clauses addressing the identified column names.
This may be advantageous because an operator of the reporting system may merely slightly modify a database schema of a source database stored in a configuration, and/or may slightly modify some additional data contained in the configuration, e.g. by adding an additional column or by mapping different column names to the same semantic concept, and the view configured to retrieve data from said source database may be automatically adapted or created such that said adapted or created view also retrieves data of the source database stored in said additional or semantically mapped column.

According to embodiments, the processor is a processor of a server computer hosting the in-memory database.

According to embodiments, the processor is configured for:
- receiving copies of the database tables of the source databases from the computer systems;
- storing each of the received database table copies in the in-memory database;
- supplementing the copied database tables with the one of the database views configured for retrieving data from said copied database tables and supplementing the copied database tables with further database views, wherein the copied database tables, said one database view and the further database views constitute a hierarchical graph of interconnected nodes, wherein the database view configured for retrieving data from the database table copies acts as root node of said hierarchical graph. For example, the supplementing with the database views may be performed when creating the in-memory database.
This may increase the performance, because the processor may be a processor of a server hosting the in-memory database and the data does not have to be retrieved by the processor via the telecommunication network. Rather, the data is retrieved from the local copies of the database tables in the in-memory database.

According to embodiments, the source database comprises at least two of the hierarchical graphs whose node structure and/or node number or topology of nodes differs from each other. The structure (e.g. the number, sequence, constraints and names of the columns of a table, of all database views and the structure of the meta view is specified by a shared database schema. This may be advantageous because the topology of the graph may be different for different source databases for providing optimal data retrieval performance in the respective source system. However, the different kinds of retrieval logic may be accessed by respective root nodes (views) having the same structure. This may ease the automated combining of data retrieved by calling the different root node views.

According to some embodiments, that two or more source databases share the same schema implies that the root nodes in the form of database views have the same tabular structure, e.g. the same name and sequence of columns. Each of said columns of a view representing a root node may represent an attribute of a data model represented by said root node.

According to embodiments, the processor is operable to automatically generate the meta view by including modified copies of database query statements and including said copied statements in the program logic of the meta view. The copied database query statements were originally contained in the program logic of the database views configured for retrieving data from the one or more source databases selected in the configuration. At least some of said database views may be created automatically as described above for various embodiments. By automatically creating at least some of said database views and by automatically and dynamically creating the meta view configured for calling said database views, a highly flexible and easily extendable and maintainable reporting system may be provided.

According to embodiments, the processor is operable to generate the database views and/or the meta view by using a database query statement implemented in an in-memory DBMS operating the in-memory database. For example, the database query statement may be an SQL CREATE statement.

According to embodiments, at least one of the database views, upon being called, retrieves the data from database table copies. The database table copies have been automatically created from database tables of one of the source databases and have been automatically transferred from said source database to the in-memory database.
In addition, or alternatively, at least a further one of the database views, upon being called, retrieves the data from database tables of another one of the source databases by accessing said source database hosted by one of the computer systems via the telecommunication network. For example, accessing a source database via the telecommunication network may be implemented by means of "Smart Data Access" data virtualization technology of SAP HANA which allows accessing remote sources such as Hadoop, Oracle, SQL server. This may be beneficial e.g. in cases where the data in the report must consist of the most recent available data. Transferring data to the in-memory database may involve some latency time and the transferred data may already be outdated.

According to embodiments, one or more columns of each of the database views respectively represent an attribute contained in the report generated by said database view. In addition, or alternatively, one or more columns of the meta view respectively represent an attribute contained in the cross-system report generated by said meta view.
According to embodiments, database views delivered by a software vendor for representing a data model of a software or a source database provided by said vendor may be used (as they are or with slight manual modifications) for retrieving the data from the source database tables. The database views may respectively represent a Virtual Data Model (VDM) delivered by the software vendor to offer analytic insight into one system/database schema, but not on several other system/database schemas. However, often cross system reports covering the data in multiple source databases are required. By using the vendor provided views as the views being called by the meta view, the reporting system allows generating a consolidated analytic meta view on these multiple systems using one or more of the vendor-provided VDM views. According to an embodiment a software tool is provided that can be used to generate a cross schema variant of a complex data model view that is originally designed for only a single source database and a corresponding database schema. The generation is executed by replacing the database table access of the vendor-provided views with a corresponding access to the tables in the relevant other source databases and corresponding database schemas. The data from the different tables and retrieved by one or more vendor-provided views are combined, for example, via a UNION ALL SQL statement contained in the program logic of the meta view.
According to embodiments, the generation of the meta view comprises automatically evaluating user- specific or user-group-specific settings in the configuration and/or evaluating a database schema of a source database stored in the configuration. The resulting customer specific variant of the Virtual Data Model (VDM) can then be used for source system specific and for cross system analytic scenarios, automatically including the data from different source databases and respective schemas as if they belong to the same database schema and if said source databases were selected in the configuration.

Thus, embodiments may provide a networked database system capable of generating analytical reports and applications for transactional data easily, flexibly and automatically. The new analytical data model supporting these scenarios is implemented in an in-memory database as database views that may be directly called by a dynamically generated meta view. Said called views may be referred to as a virtual data model (VDM). The VDM does not change the existing data model or database table structure. To benefit from the new data model, data do not need to be extracted and there is no additional persistence needed. Rather, the view-based data model may be based on the original (or existing) data. The VDM can be accessed via standard access protocols like multidimensional expressions (MDX) and structured query language (SQL). System users are able to easily extend the VDM for their own specific purposes. The VDM is an enabler for a new openness and flexibility in the analytic world. Every analytic tool that is able to connect via SQL or MDX (like MS Excel, Crystal Reports, or Business Object Explorer) can be used to directly access the VDM for analytics and reporting on operational data.

According to embodiments, the processor is configured for automatically identifying, in response to receiving a request for generating a report for one of the computer systems, by the database system, the one of the database views assigned to said one computer system for which the report was requested, and directly calling the one identified database view.

This may be advantageous because in addition to the cross-system report, source-system specific reports may also be generated. Legacy applications may still use the direct access to individual reports by directly calling the respective database view. By selecting only one source system in the configuration and calling the meta view, the meta view will basically return the same data, but may process and layout said data differently as a database view generating the legacy report for said source database. Thus, a highly flexible cross-system reporting layer may be provided on top of a largely unmodified legacy system architecture.

In a further aspect, the invention relates to a computer-implemented reporting method comprising:
- providing a networked database system hosting an in-memory database, the database system being operatively coupled via a network to a plurality of computer systems, each computer system comprising a source database, wherein the in-memory database comprises, for each of the source databases, a database view, each database view being associated with said source database, each database view comprising program logic configured to create a report for said source database in response to being called, the creation of the report comprising retrieving data from at least one database table, the at least one database table being stored in said source database and/or being stored in the in-memory database as a copy of a database table of said source database;
- modifying, by a portable battery powered telecommunication device of a user, via an interface a configuration of the networked database system, a selection of one or more of the source databases, the selection being stored in a configuration of the networked database system, wherein each of the source databases selected in the configuration has assigned a database schema, each schema being indicative of how the data contained in said source database is organized;
- automatically evaluating the configuration for identifying two or more of the selected source databases sharing a common database schema;
- automatically identifying at least one of the database views configured for retrieving data from one of the source databases identified in said evaluation and being already contained in the in-memory database at the moment of evaluation;
- automatically identifying one or more of the source databases identified in said evaluation for which the in-memory database lacks a respective database view configured for retrieving data from said source database;
- automatically creating the database views configured for retrieving data from said one or more identified source databases by:
   ▪ creating a copy of the program logic of the at least one identified database view for each of the one or more identified source databases;
   ▪ modifying the created copies for causing the modified program logic to retrieve data from one of the one or more identified source databases;
- receiving a request for generating a cross-system report from the telecommunication device via a telecommunication network, the cross-system report comprising data stored across multiple ones of the source databases;
- in response to receiving the request, evaluating the configuration for automatically creating a meta view, the meta view being a further database view and comprising program logic configured to create the cross-system report by:
   ∘ selectively calling, upon the meta view being called, the database views associated with the source databases selected in the configuration, thereby selectively retrieving data from said selected source databases, and
   ∘ combining, by executing a database operation provided by the in-memory database, the data retrieved by each of the called database views for providing the cross-system report;
- in response to receiving the request, automatically creating the meta view and calling the generated meta view for generating the cross-system report; and
- returning a response to the telecommunication device via the telecommunication network, the response comprising the generated cross-system report.

In a further aspect, the invention relates to a computer readable medium comprising instructions that when executed by a processor causes the processor to execute a method according to any one of the above embodiments.

An "in-memory database" is a database managed by an in-memory database management system (DBMS). An in-memory DBMS primarily relies on main memory for storing the data contained in the in-memory database. It is contrasted with database management systems that employ a disk storage mechanism. Typically, main memory databases are faster than disk-optimized databases since the internal optimization algorithms are simpler and execute fewer CPU instructions. Accessing data in memory eliminates seek time when querying the data, which provides faster and more predictable performance than disk.

A "configuration" as used herein is a data structure, e.g. a file, a set of database records, a database table or the like that comprises some configuration data. The configuration data may specify from which source databases or respective copies in the in-memory databases data shall be retrieved, and thus, may specify the dynamically created program logic of the meta view. The configuration may further comprise database schemas of the source databases. It may be modifiable by a user via an interface, e.g. a graphical user interface (GUI). The GUI may be implemented, for example, by an HTML page provided by the analytical system 118 via the network 117 and displayed on the screen of the user's portable battery powered telecommunication device 120 by a browser.

A "database view" is a tabular data structure including some program logic consisting of database operations that may be performed by a database management system (DBMS), e.g. the DBMS of an in-memory database. The program logic may consist of stored SQL queries capable of retrieving a result set from one or more database tables and/or further database views. A user may query a database view just in the same way as he or she would do in a persistent database collection object (e.g. a table). This pre-established program logic may be kept in the database dictionary. Unlike ordinary tables in a relational database, a database view does not form part of the physical schema: as a result set, it is a virtual table computed or collated dynamically from data in the database when access to said database view is requested. Changes applied to the data in a relevant underlying table are reflected in the data shown in subsequent invocations of the view.

A, telecommunication device' may be any kind of data processing device, for example and without limitation, a notebook computer, a smartphone, a tabloid PC or the like that is connected or connectable to a mobile telecommunication network.

A, database schema' as used herein is any kind of information being indicative of the structure of a source database or a copy of said source database or parts thereof having been replicated to the in-memory database. The schema may comprise all information necessary for creating one or more database tables from scratch or may comprise only some aspects of the structural organization of the data, e.g. one or more table names and their respective column names.

A 'telecommunication network' or "network" as used herein is a data communication network such as, for example, the internet or an Intranet. In particular, the telecommunication network may be a wireless network, e.g. a mobile communication network, also known as 'cellular network' distributed over land areas called cells, each served by at least one fixed-location transceiver, known as a cell site or base station. A network interface is any hardware, firmware and/or software component configured to connecting a computer, e.g. an analytical system 118 and/or a telecommunication device 120 to the network.

A 'report' as used herein is a data set comprising data of a single source database. A 'cross system report' as used herein is a data set comprising data that was stored in two or more source databases. The data may be retrieved dynamically from the source database(s) for creating the (cross system) report via the network and/or may be retrieved from a copy of a source database, the copy being stored in the in-memory database.

### Brief description of the drawings

In the following embodiments of the invention are explained in greater detail, by way of example only, making reference to the drawings in which:
- FIG. 1: is a block diagram illustrating a networked database system comprising an in-memory database.
- FIG. 2: is a block diagram illustrating the relationships and connectivity of multiple computer systems, views, schemas and an in-memory system.
- FIG. 3: is a block diagram illustrating the generation of an individual database view and the generation of a meta view;
- FIG. 4: illustrates a configuration
- FIG. 5: illustrates operations and steps of a system and method to generate a cross system report using database views acting as virtual data models.

### Detailed description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, electrical, and optical changes may be made without departing from the scope of the present invention. The following description of example embodiments is, therefore, not to be taken in a limited sense, and the scope of the present invention is defined by the appended claims.

In a computer system that uses an in-memory database, such as the SAP HANA® database, the in-memory database allows the integration of online transaction-based (OLTP) processes and online analytics-based (OLAP) processes on one database platform. The online/in-memory database makes it possible to run applications, especially analytical applications, directly on the database without the necessity of an application server.

Such in-memory database systems can include several parts. There is first the in-memory database that has column and row store capabilities. An in-memory database allows high-performance processing and analysis of data that is already on the database, and it therefore does not require the transfer of data from the database to an application server. With an in-memory database, it is possible to push performance-critical parts of the business logic down to the database.

An in-memory database can also include administration and development tools. The in-memory database can also include tools for the integration of data from one or more source databases. An in-memory database can be delivered as an appliance, that is, a combination of specific hardware and software. One or more of the views may allow generating an analytical report for an individual source database although the database schema of the source database may be optimized for storing transactional data. Thus, by automatically, manually or semi-automatically adding the views and the meta-view to the in-memory database, it is possible to add additional functionality to the system without changing the existing data structure and processes. The added views may be identical or modified copies of views already existing in the source databases and/or may be created de novo in the in-memory database. It is also possible that for some source databases, existing views are copied to the in-memory database while for other source databases a respective new view is created and stored in the in-memory database.

In a networked database system landscape, an in-memory database can be deployed in at least two different manners. First, the in-memory database can be used as the primary database of the reporting system, thereby replacing any other standard database used as source database. This first deployment scenario enables direct analytical access to the data stored in the business in-memory database via analytical tools provided e.g. from the in-memory database management system (DBMS) or an external application.

In the second deployment manner, the in-memory database is installed as a secondary database side-by-side with the existing source databases. The data of the source databases and corresponding computer systems that are needed for the analytical applications and/or for generating the cross-system report can be replicated in 'real-time' to the in-memory database. Consequently, the data are in sync between the in-memory system and the computer systems comprising the source databases. The analytical applications are then executed on the in-memory database, and the existing computer systems and their source databases are not influenced or changed.

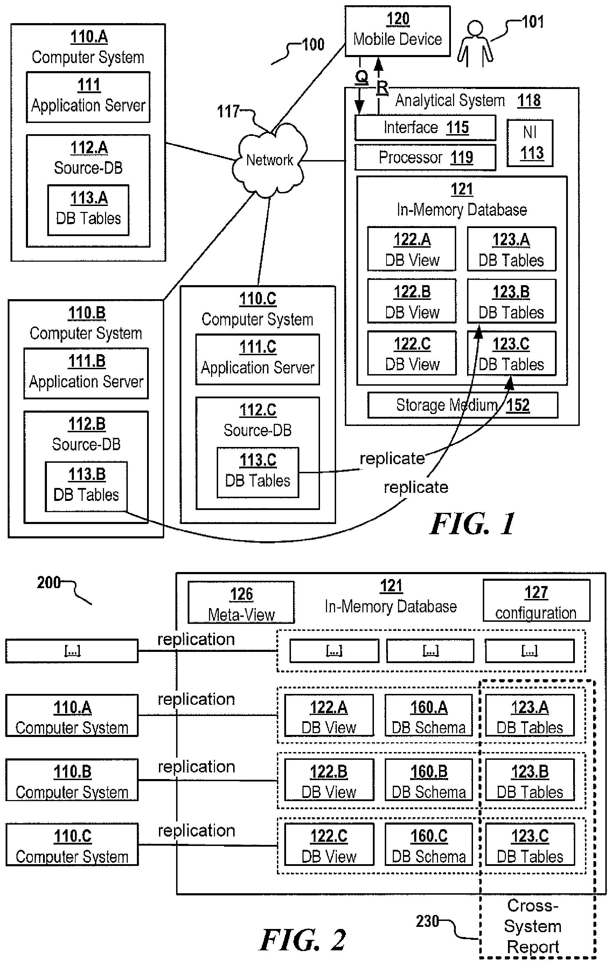

**FIG. 1** illustrates a networked database system 100 that includes multiple computer systems 110.A.-.110.C respectively hosting an application server 111.A-111.C and a source database 112.A-112.C. Each source database respectively includes one or more source database tables 113.A-113.C. Each source database may be managed by a respective database management system (DBMS). As noted above, the database tables 113 can be replicated in real time to the in-memory database 121, and stored as database table copies 123 in the in-memory database 121. Views 122.A-122.C provide analytical access into the in-memory database tables 123.A-C, i.e., allow to generate individual reports or, by means of a meta view discussed later, a cross-system report covering the data of multiple ones of the tables 113 and/or tables 123. A mobile telecommunication device 120, e.g. a Smartphone or a notebook of a user 101, uses the views 122 to access the in-memory database tables 123. In some embodiments, one or more of the views 122 may even allow for a remote access of the tables 113 in the source databases 112. The views 122.A-122.C may be called individually for retrieving a report for a single one of the source database systems or may be called collectively by a dynamically generated meta view for generating a cross-system report.

For example, database 110.A may comprise human resource information on its European employees, and database 110.B that relates to human resource information for its Australian employees may have a slightly differing data structure compared to database 110.A. The data of both databases 110.A, 110.B may be replicated automatically to the in-memory database without any change in the structure of the replicated database tables. Database schemata 160.A, 160.B are created after having finished the replication. The database views 122 may have a tabular structure and some program logic for retrieving data from the respective replicated source tables. The structural information contained in the schemas 160, e.g. column names, may be used for automatically or semi-automatically creating a respective database view 122. The tabular structure of the database views 122.A, 122.B may be identical. This may allow for an easy and automated combination of the retrieval results generated by the respective views 122.A, 122.B, because the syntax of any select statement capable of retrieving data from view 122.A will also be capable of retrieving data from view 122.B. The data retrieval logic of the views 122.A, 122.B may slightly differ to allow the view 122.A to retrieve data from the tables 123.A and to allow the view 122.B to retrieve data from the tables 123.B, whereby said tables may have a slightly differing structure. The schemas 160.A and 160.B specify the tabular structure of the respective database view 122. The equality of the two or more schemas 160.A-160.C indicates that the structure of the respective database views 122.A-122.C, i.e., the name and type of columns of said views, are identical.

In some embodiments, database views provided by a software vendor of a legacy application of a source system 110.A-110.C are transferred to the in-memory database 121 and used as a data model. Calls to the database views 122 may be integrated in the program logic of an automatically and dynamically generated meta view 126. The meta view creates a cross-system report covering the data of all source databases (or their respective copies in the in-memory database) selected in a configuration 127. Thus, a client, e.g. a telecommunication device 120 of a user 101 may get a "cross system report" by calling the meta-view, wherein the meta view covers not only the data of one replicated system but of several replicated source databases or parts thereof and optionally also one or more non-replicated source databases. Some of the views 122 called by the meta view 126 may be copied from a respective one of the source databases, some of the views 122 may be manually created and some of the views 122 may be created automatically or semi-automatically by copying and modifying one of the existing views in the in-memory database (replicated ones or manually created ones).

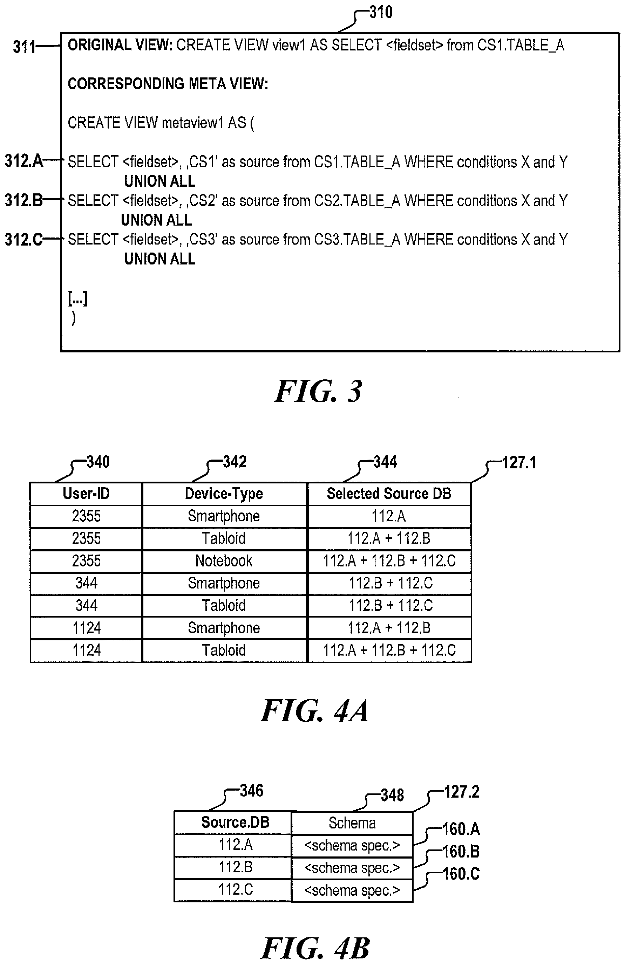

According to embodiments, at least some of the plurality of database views 122.A-122.C are generated automatically. At first, the processor 119 may determine that database schemas 160.A, 160.B and 160.C may be identical. For schema 160.A, specifying a tabular structure of a database view, a corresponding database view 122.A may already exist in the in-memory database 121. For schemas 160.B and 160.C which may be identified as being identical to schema 160.A, no corresponding database view may yet be contained in the in-memory database 121. The processor may create a copy of the database view 122.A for generating database view 122.B, whereby the SELECT query contained in the program logic of the copied database view 122.B is modified such that the modified SELECT query does not any more retrieve data from source database 110.A (as is the case with view 122.A) but rather from source database 110.B. Analogous actions may be performed for creating database view 122.C. Thereby, multiple database views may be created automatically provided that the schemas of said views are identical and that at least one database view was already created, e.g. by means of a database import operation or by a user manually creating said database view 122.A. Thus, the generation of the other database views 122.B, 122.C is based on replacement of the database table access statements contained in database view 122.A. The generation of the meta view (see Fig. 3) may be based on creating the meta view's program logic by combining the select statements 312.A-312.C of the individual views by UNION statements.

As further illustrated in **FIG. 3****,** the database query statements SELECT of the individual database views 122.A-122.C may be combined for generating the meta view 126. For example, UNION ALL statements as depicted in Fig. 3 may be used to generate the meta view. The database query statements contained in the individual database views 122 and in the meta view 126 are SQL query statements.

Thus, the database view assigned to one of the source databases and the corresponding database schema is used as a template to generate other database view having assigned the same schema or even a slightly deviating database schema. In case the schema of e.g. view 122.B slightly deviates from the schema 122.A acting as the template, e.g. because the schema 122.B comprises additional column names and/or table names of the source database, the database view 122.B is automatically created such that the modified SELECT statement also retrieves data from said additional columns and/or tables.

Generally, program modules include routines, programs, objects, components, data structures, etc., that perform particular tasks or implement particular abstract data types may be described herein either by referring to said routines or components or by referring to a corresponding method or method step. Terms referring to a hardware, software or firmware component such as 'module', 'unit' or 'program logic' should be considered as also describing and referring to a respective method step and vice versa. Each of the computer systems 110.A-110.C and/or the telecommunication device 120 and/or the analytical system 118, e.g. a server, hosting the in-memory database 121 may comprise a processor for processing data, e.g. processor 119 of analytical system 118 hosting the in-memory database 121. Each of said systems may in addition comprise a main memory and a non-volatile storage medium.

The network 117 may be, for example, a local area network (LAN), e.g. an intranet, and/or a wide area network (WAN), e.g. the Internet. The analytical system 118 may comprise a network interface 113, e.g. a modem, an Ethernet card, a WLAN adapter or the like, to the network 117, e.g. the internet. It may also provide an interface 115 for receiving queries Q from one or more portable telecommunication devices 120 via the network 117. The interface may be, for example, an HTML GUI interface provided by the analytical system 118 and displayed in a browser of the mobile device 120.

**FIG. 2** is a block diagram of a system 200, the diagram illustrating the relationships and connectivity of multiple source databases and an in-memory database. The system 200 includes several source computer systems 110.A, 110.B, and 110.C. These multiple computer systems can be associated with a single user or said user's mobile telecommunication device 120. The database schemas for one or more of these source databases 112 of the computer systems are replicated into the in-memory database. Specifically, the replication results in a database schema 160.A for computer system 110.A, a database schema 160.B for computer system 110.B, and a database schema 160.C for computer system 110.C. As will be explained in detail herein, the analytical reporting system 118 uses the database views 122 to generate a cross system report for the databases 112.A-112.C.

According to an embodiment, the networked database system comprises a software tool that creates, based on the one of the database views 122 fitting to a single schema, a variant of this database view, the variant being fitted to a slightly different database schema. For example, said database view variant may comprise a different set of column names and table names from which data shall be retrieved. The tool may provide a GUI enabling a user to modify a database schema stored in a configuration 127, whereby said schema is used as a structural template for automatically generating a database view 122 by said tool in accordance with a respective schema 160. The software tool evaluates the configuration and the schemas 160 for generating the views. In addition, the tool and/or a component of the in-memory database may create, in response to receiving a query Q - see Fig. 1- the meta view. For example, the tool or the in-memory database may use one of the views 122 as a template, replace the part of the template (that is, the database query language) that accesses a database table with a corresponding access to multiple database tables from different source databases being selected in configuration 127. This functionality is illustrated in FIG. 3.

**FIG. 3** illustrates a set 310 of database query statements that are used for creating database views and the meta view. A database view, e.g. 122.A, may be created by performing the create statement 311, the statement comprising a SELECT statement for column names specified in the section <fieldlist> from CS1.TABLE_A at 311, wherein CS stands for "computer system", e.g. computer system 110.A. A corresponding cross-schema view 320 is created using configuration 127, which allows a user to select the source databases and corresponding schemas 160 that the user would like to view. Based on the user's selection, the processor 119 generates database query statements 312A, 312B, and 312C such as SELECT <fieldlist > from CS1.TABLE_A, CS2.TABLE_A, and CS3.TABLE_A.

The part of the view that accesses a database table (e.g., SELECT <fieldlist> FROM CS1.TABLE_A) is replaced by an access of the same table in multiple source databases (312A, 312B, 312C). The result is stored as a new view (the meta view 126) in a content package in a user namespace. Users can specify different source database selections for different types of mobile telecommunication devices 120 such as Smartphones, tabloid computers or notebooks. Accordingly, different kinds of meta views capable of generating different kinds of cross system reports may be generated. As the selection of the source databases in the configuration may be user-specific, it may be possible to get a 'user specific' sight on the data.

According to embodiments, the meta view is generated as follows: data of the connected computer systems 110 are replicated to the in-memory database. The customer/user specifies the in-memory database schemas 160 and corresponding source databases that are to be considered for the cross system report generation in a configuration. The customer may also specify the selection of source databases in a device type or user group specific manner.

**Fig. 4** illustrates a configuration comprising some user specific and device specific settings and selections of some of the source databases 112.A-112.C. For example, in a first column 340 of a first section 127.1 of a configuration 127, some user-IDs or group-IDs may be specified. For example, a user may have assigned user-ID 2355. In a further column 342, one or more device types may be specified. The device types specify the type of a mobile telecommunication device 120 assigned to a user, whereby said device type may be indicative of the display size. In a further column 344, the configuration may comprise a selection of one or more of the plurality of source databases 112.A, 112.B, 112.C from which data shall be retrieved when generating a cross-system report.

In another section 127.2 of the configuration, each of the source databases identified in a table column 346 may have assigned a respective database schema stored e.g. in a further column 348 of the configuration. Each schema may specify the columnar data structure of a respective one of the source database specific views. The schemas may be user-modifiable. The schemas may be evaluated by the processor 119 for automatically creating further database views 122 whose schema is identical to an existing database view 112. In addition, the processor may evaluate the schemas in order to automatically assemble a meta view capable of retrieving data from the selected source databases by calling the respective database views assigned to the selected source databases in the configuration 127. For example, the schema may specify the column and table names of the source databases from which data for a source database specific report shall be retrieved. By adding, modifying or removing column names and table names in the schema, the user may trigger the automated re-creation of a respective database view.

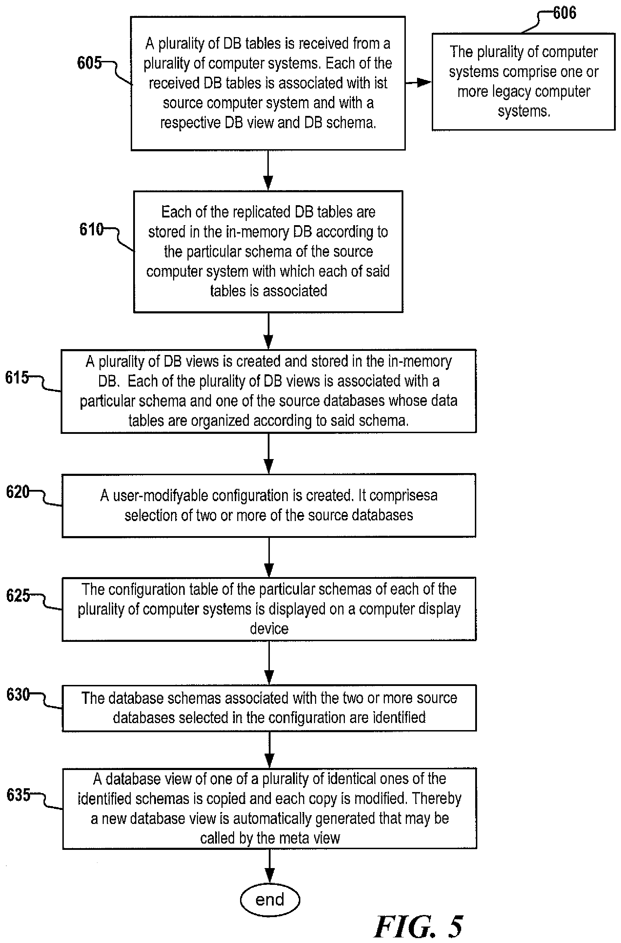

**FIG. 5** illustrates in a block diagram the above-disclosed processes and mechanisms for generating analytic reports on a computer system, and in particular, a computer system that includes an in-line memory database for the generation of the a cross-system report. Though arranged serially in the example of FIG. 5, other examples may reorder the blocks, omit one or more blocks, and/or execute two or more blocks in parallel using multiple processors or a single processor organized as two or more virtual machines or sub-processors. Moreover, still other examples can implement the blocks as one or more specific interconnected hardware or integrated circuit modules with related control and data signals communicated between and through the modules. Thus, any process flow is applicable to software, firmware, hardware, and hybrid implementations. Referring now specifically to FIG. 5, at 605, a plurality of database tables are replicated from a plurality of computer systems 110.A-110.C via a network to the in-memory database. Each of the plurality of database tables or their replicated copy is associated with its respective source computer system, and each source computer system is associated with a particular database schema. As noted at 606, the plurality of computer systems includes one or more legacy systems, i.e., systems whose software based program logic cannot or shall not be changed at all or only to a very small degree. At 610, each of the plurality of database tables of at least one source database is stored in the in-memory database according to the particular schema assigned to said source database. Operations 605, 606, 610, and 611 permit a replication of multiple source databases to an in-memory database via a network.

At 615, a plurality of database views is created and stored in the in-memory database. Each of the plurality of views 112 is associated with a particular database schema 160. According to some embodiments, one or more of the database views have assigned multiple database schemas that may be used in dependence on the user having requested the cross system report. At 620, a configuration table is generated comprising the particular schemas of each of the source databases of the plurality of computer systems. An example implementation of the configuration table 127 is illustrated in Fig. 4. In an embodiment, the software vendor delivers the configuration table to its customers and the customers create entries in the configuration table. These customer-created entries specify which of the source databases shall be covered by a cross-system report. At 625, the configuration table of the particular source databases of each of the plurality of computer systems is displayed on a display of a mobile telecommunication device. The user having modified the configuration may be a customer of a software vendor of the source database software. At 630, a selection of one or more source databases from the display is received by a processor of a server hosting the in-memory database. The entries selected or entered by a user are stored on a database and are therefore available for the generation of views. At 635, a database view from one of the selected source databases used as a template to generate a view for all of the selected source databases for creating the meta view.

## Claims

1. A networked database system (100) comprising:
- a computer processor (119);
- an in-memory database (121);
- a network interface (113) for coupling the in-memory database to a plurality of computer systems (110.A-110.C) via a telecommunication network (117), each of said computer systems comprising a source database (112.A-112.C);
- a configuration (127) comprising a selection of one or more of the source databases, wherein each of the source databases selected in the configuration has assigned a database schema (160.A-160.C), each schema being indicative of how the data contained in said source database is organized;
- an interface (115) to a portable battery powered telecommunication device (120) of a user (101), the interface enabling the user to modify the selection in the configuration;
wherein the in-memory database comprises:
∘ for each of the source databases (112.A-112.C), a database view (122.A-122.C) being associated with said source database, each database view comprising program logic configured to create a report for said associated source database in response to being called, the creation of the report comprising retrieving data from at least one database table, the at least one database table being stored in said source database and/or being stored in the in-memory database as a copy of a database table of said source database;
wherein the processor is configured for:
- automatically evaluating the configuration (127) for identifying two or more of the selected source databases sharing a common database schema;
- automatically identifying at least one of the database views configured for retrieving data from one of the source databases identified in said evaluation and being already contained in the in-memory database at the moment of evaluation;
- automatically identifying one or more of the source databases identified in said evaluation for which the in-memory database lacks a respective database view configured for retrieving data from said source database;
- automatically creating the database views configured for retrieving data from said one or more identified source databases by:
▪ creating a copy of the program logic of the at least one identified database view for each of the one or more identified source databases;
▪ modifying the created copies for causing the modified program logic to retrieve data from one of the one or more identified source databases;
- receiving a request (Q) for generating a cross-system report (230) from the telecommunication device via the telecommunication network (117), the cross-system report comprising data stored across multiple ones of the source databases;
- in response to receiving the request, evaluating the configuration for automatically creating a meta view (126), the meta view being a further database view of the in-memory database, and creating the meta view, the meta view comprising program logic configured to create the cross-system report by:
∘ selectively calling, upon the meta view being called, the database views associated with the source databases selected in the configuration, thereby selectively retrieving data from said selected source databases, and
∘ combining, by executing a database operation implemented in an in-memory DBMS operating the in-memory database, the data retrieved by each of the called database views, thereby providing the cross-system report;
- in response to receiving the request, automatically calling the generated meta view for generating the cross-system report; and
- returning a response (R) to the telecommunication device (120) via the telecommunication network, the response comprising the generated cross-system report.

2. The database system of claim 1,
wherein the processor is configured for:
- evaluating the request (Q) of the telecommunication device for identifying an estimated display size of the telecommunication device;
- automatically modifying the configuration, wherein the larger the estimated display size, the larger the number of source databases selected in the modified configuration.

3. The database system of any one of the previous claims,
- wherein the telecommunication device is one of a plurality of telecommunication devices respectively being operatively coupled to the in-memory database via the telecommunication network;
- wherein the configuration comprises, for each of the telecommunication devices, a specification of the one or more selected source databases associated with a device type of said telecommunication device;
wherein the processor is configured for:
- upon receiving the request (Q) for the cross-system report from one of the telecommunication devices, evaluating the configuration for identifying the one or more selected source databases associated with said telecommunication device; and
- using the identified selected source databases for creating a telecommunication-device-type specific version of the meta view, the telecommunication device type specific version of the meta view being configured for retrieving data from at least one database table of each of said one or more identified selected source databases.

4. The database system of any one of the previous claims,
- wherein each of one or more of the database views (122.A-122.C) is a root node of a hierarchical graph of interconnected nodes; and
- wherein the interconnected nodes of each of said hierarchical graphs comprise one or more of the database tables whose data is retrieved by the database view acting as the root node upon being called, and wherein said interconnected nodes of each of said hierarchical graphs comprise one or more further database views, each of said further database views being configured to retrieve data from one or more of said database tables of said hierarchical graph upon being called by another one of the further database views or by the root node view of said hierarchical graph;
- wherein at least a first one of the hierarchical graphs comprises database tables respectively acting as a node of said first hierarchical graph, wherein said database tables are stored in the in-memory database and constitute a copy of database tables in one of the source databases; and
- wherein at least a second one of the hierarchical graphs comprises database tables respectively acting as a node of said second hierarchical graph, wherein said database tables are stored in one of the source databases and whereby the data retrieved from said database tables is retrieved via the telecommunication network in response to a call of the root node of said second hierarchical graph; and
- wherein calling each of said database views by the meta view comprises calling the further database views of said hierarchical graph in a cascaded manner starting with the execution of the root node, and returning the data retrieved from the database tables constituting nodes of said hierarchical graph.

5. The database system of any one of the previous claims,
- wherein each of the database views has assigned access permission information;
- wherein the request (Q)for generating the cross-system report has assigned a user-ID or group-ID of the user; and
- wherein the automatic creation of the meta view comprises: evaluating the access permissions assigned to the database views associated with the one or more source databases selected in the configuration, and creating the meta view such that the generated meta view is configured for selectively calling, upon the meta view being called, the database views associated with the one or more source databases selected in the configuration which have assigned access permission information indicating that the user having assigned said user-ID or group-ID is allowed to access said database view.

6. The database system of any one of the previous claims, wherein creating the meta view comprises:
- automatically identifying, within each of the database views assigned to one of the source databases selected in the configuration, a database sub-query, each database sub-query being configured to:
∘ retrieve data from one of the source databases via the telecommunication network; or
∘ retrieve data from a copy of said one source database, said copy being stored in the in-memory database,
- combining the identified sub-queries for generating a combined database query, the combined database query being part of the program logic of the meta view, said program logic being configured for generating the cross-system report.

7. The database system of any one of the previous claims, wherein each of the source databases selected in the configuration has assigned a database schema (160.A-160.C) according to which the data contained in said source database is organized, the processor being further configured for:
- automatically evaluating the configuration for identifying a first selected one (112.A) of the source databases having assigned a first schema (160.A) and a second selected one (112.B) of the source databases having assigned a second schema (160.B), wherein the column names of the first schema is a sub-set of the column names of the second schema;
- automatically identifying column names of tables of the second source database which are contained in the second schema being absent from the first schema;
- automatically creating one of the database views configured for retrieving data from the second source database by:
∘ automatically creating a copy of the database view configured for retrieving data from said identified first source database;
∘ automatically modifying said copy for causing the modified program logic to retrieve data from the second source database or from a copy of said second source database stored in the in-memory database, thereby supplementing the program logic of the copied database view with one or more SELECT clauses (312.A) addressing the identified column names.

8. The database system of any one of the previous claims, wherein the processor is configured for:
- receiving copies of the database tables of the source databases from the computer systems;
- storing each of the received database table copies in the in-memory database;
- supplementing the copied database tables with the one of the database views configured for retrieving data from said copied database tables and supplementing the copied database tables with further database views, wherein the copied database tables, said one database view and the further database views constitute a hierarchical graph of interconnected nodes, wherein the database view configured for retrieving data from the database table copies acts as root node of said hierarchical graph.

9. The database system of claim 8,
- wherein the source database comprises at least two of the hierarchical graphs whose node structure and/or node number or topology of nodes differs from each other; and
- wherein the structure of all database views (112) and the structure of the meta view is specified by a shared database schema (160).

10. The database system of any one of the previous claims, wherein the processor is operable to automatically generate the meta view by including modified copies of database query statements in the program logic of the meta view, the copied database query statements being originally contained in the program logic of the database views configured for retrieving data from the one or more source databases selected in the configuration.

11. The database system of any one of the previous claims, wherein the processor is operable to generate the database views and/or to generate the meta view using a database query statement (311) implemented in an in-memory DBMS operating the in-memory database.

12. The database system of any one of the previous claims, wherein
- at least one of the database views upon being called retrieves the data from database table copies, the database table copies having been automatically created from database tables of one of the source databases and having been automatically transferred from said source database to the in-memory database; and/or
- at least a further one of the database views upon being called retrieves the data from database tables of another one of the source databases by accessing said source database hosted by one of the computer systems via the telecommunication network.

13. A computer-implemented reporting method comprising:
- providing a networked database system (100) hosting an in-memory database (121), the networked database system being operatively coupled via a telecommunication network (117) to a plurality of computer systems (110.A-110.C), each computer system comprising a source database (112.A-112.C), wherein the in-memory database comprises, for each of the source databases, a database view (122.A-122.C), each database view being associated with said source database, each database view comprising program logic configured to create a report for said source database in response to being called, the creation of the report comprising retrieving data from at least one database table, the at least one database table being stored in said source database and/or being stored in the in-memory database as a copy of a database table of said source database;
- modifying, by a portable battery powered telecommunication device (120) of a user (101), via an interface (115) a configuration (127) of the networked database system, a selection of one or more of the source databases, the selection being stored in the configuration of the networked database system, wherein each of the source databases selected in the configuration has assigned a database schema (160.A-160.C), each schema being indicative of how the data contained in said source database is organized;
- automatically evaluating the configuration (127) for identifying two or more of the selected source databases sharing a common database schema;
- automatically identifying at least one of the database views configured for retrieving data from one of the source databases identified in said evaluation and being already contained in the in-memory database at the moment of evaluation;
- automatically identifying one or more of the source databases identified in said evaluation for which the in-memory database lacks a respective database view configured for retrieving data from said source database;
- automatically creating the database views configured for retrieving data from said one or more identified source databases by:
▪ creating a copy of the program logic of the at least one identified database view for each of the one or more identified source databases;
▪ modifying the created copies for causing the modified program logic to retrieve data from one of the one or more identified source databases;
- receiving a request (Q) for generating a cross-system report (230) from the telecommunication device via the telecommunication network, the cross-system report comprising data stored across multiple ones of the source databases;
- in response to receiving the request, evaluating the configuration for automatically creating a meta view (126), the meta view being a further database view of the in-memory database and comprising program logic configured to create the cross-system report by:
∘ selectively calling, upon the meta view being called, the database views associated with the source databases selected in the configuration, thereby selectively retrieving data from said selected source databases, and
∘ combining, by executing a database operation provided by the in-memory database, the data retrieved by each of the called database views for providing the cross-system report;
- in response to receiving the request, automatically creating the meta view and calling the generated meta view for generating the cross-system report; and
- returning a response (R) to the telecommunication device via the telecommunication network, the response comprising the generated cross-system report.

14. A computer readable medium (152) comprising instructions that when executed by a processor (119) causes the processor to execute a method according to claim 13.

## Patentansprüche

1. Vernetztes Datenbanksystem (100), umfassend:
- einen Computerprozessor (119);
- eine In-Memory-Datenbank (121);
- eine Netzschnittstelle (113) zum Koppeln der In-Memory-Datenbank mit einer Vielzahl von Computersystemen (110.A-110.C) über ein Telekommunikationsnetz (117), wobei jedes der Computersysteme eine Quelldatenbank (112.A-112.C) umfasst;
- eine Konfiguration (127), die eine Auswahl von einer oder mehreren der Quelldatenbanken umfasst, wobei jeder von den Quelldatenbanken, die für die Konfiguration ausgewählt worden sind, ein Datenbankschema (160.A-160.C) zugeordnet ist, wobei jedes Schema angibt, wie die in der Quelldatenbank enthaltenen Daten organisiert sind;
- eine Schnittstelle (115) zu einer tragbaren, batteriebetriebenen Telekommunikationsvorrichtung (120) eines Anwenders (101), wobei die Schnittstelle den Anwender in die Lage versetzt, die Auswahl in der Konfiguration zu modifizieren;
wobei die In-Memory-Datenbank umfasst:
∘ für jede der Quelldatenbanken (112.A-112.C) eine Datenbankansicht (122.A-122.C), die zu der Quelldatenbank gehört, wobei jede Datenbankansicht Programmlogik umfasst, die dafür ausgelegt ist, als Antwort auf einen an sie ergangenen Aufruf einen Bericht für die zugeordnete Quelldatenbank zu erzeugen, wobei die Erzeugung des Berichts ein Abrufen von Daten aus mindestens einer Datenbanktabelle umfasst, wobei die mindestens eine Datenbanktabelle in der Quelldatenbank gespeichert ist und/oder in der In-Memory-Datenbank als Kopie einer Datenbanktabelle der Quelldatenbank gespeichert ist;
wobei der Prozessor für Folgendes ausgelegt ist:
- automatisch Evaluieren der Konfiguration (127) zur Erkennung von zwei oder mehr der ausgewählten Quelldatenbanken, die ein Datenbankschema gemeinsam haben;
- automatisch Erkennen mindestens einer der Datenbankansichten, die dafür ausgelegt sind, Daten aus einer der durch das Evaluieren erkannten Quelldatenbanken abzurufen, und die im Augenblick der Evaluierung bereits in der In-Memory-Datenbank enthalten sind;
- automatisch Erkennen einer oder mehrerer der durch das Evaluieren erkannten Quelldatenbanken, für die der In-Memory-Datenbank eine entsprechende Datenbankansicht, die dafür ausgelegt ist, Daten aus der Quelldatenbank abzurufen, fehlt;
- automatisch Erzeugen der Datenbankansichten, die dafür ausgelegt sind, Daten aus der einen oder den mehreren erkannten Datenbanken abzurufen, durch:
▪ Erzeugen einer Kopie der Programmlogik der mindestens einen erkannten Datenbankansicht für die eine oder für jede von den mehreren erkannten Quelldatenbanken;
▪ Modifizieren der erzeugen Kopien, um zu bewirken, dass die modifizierte Programmlogik Daten aus der einen oder den mehreren erkannten Quelldatenbanken abruft;
- Empfangen einer Anfrage (Q) nach Erstellung eines systemübergreifenden Berichts (230) von der Telekommunikationsvorrichtung über das Telekommunikationsnetz (117), wobei der systemübergreifende Bericht Daten umfasst, die über mehreren der Quelldatenbanken gespeichert sind;
- als Antwort auf den Empfang der Anfrage: Evaluieren der Konfiguration für ein automatisches Erzeugen einer Meta-Ansicht (126), wobei die Meta-Ansicht eine weitere Datenbankansicht der In-Memory-Datenbank ist, und Erzeugen der Meta-Ansicht, wobei die Meta-Ansicht Programmlogik umfasst, die dafür ausgelegt ist, den systemübergreifenden Bericht zu erzeugen durch:
∘ selektives Aufrufen der Datenbankansichten, die zu den in der Konfiguration ausgewählten Quelldatenbanken gehören, auf einen an die Meta-Ansicht ergangenen Aufruf hin, wodurch selektiv Daten aus den ausgewählten Quelldatenbanken abgerufen werden, und
∘ Kombinieren der Daten, die durch die einzelnen aufgerufenen Datenbankansichten abgerufen werden, durch Ausführen einer Datenbankoperation, die in einem In-Memory-DBMS implementiert ist, das die In-Memory-Datenbank betätigt, wodurch der systemübergreifende Bericht bereitgestellt wird;
- als Antwort auf den Empfang der Anfrage: automatisches Aufrufen der erstellten Meta-Ansicht zur Erstellung des systemübergreifenden Berichts; und
- Rücksenden einer Antwort (R) an die Telekommunikationsvorrichtung (120) über das Telekommunikationsnetz, wobei die Antwort den erstellten systemübergreifenden Bericht umfasst.

2. Datenbanksystem nach Anspruch 1,
wobei der Prozessor für Folgendes ausgelegt ist:
- Evaluieren der Anfrage (Q) der Telekommunikationsvorrichtung zur Erkennung einer geschätzten Anzeigegröße der Telekommunikationsvorrichtung;
- automatisch Modifizieren der Konfiguration, wobei die Anzahl der Quelldatenbanken, die in der modifizierten Konfiguration ausgewählt werden, umso größer ist, je größer die geschätzte Anzeigegröße ist.

3. Datenbanksystem nach einem der vorangehenden Ansprüche,
- wobei die Telekommunikationsvorrichtung eine von einer Vielzahl von Telekommunikationsvorrichtungen ist, die jeweils über das Telekommunikationsnetz betriebsmäßig mit der In-Memory-Datenbank gekoppelt sind;
- wobei die Konfiguration für jede der Telekommunikationsvorrichtungen eine Spezifikation der einen oder der mehreren ausgewählten Quelldatenbanken umfasst, die zu einem Vorrichtungstyp der Telekommunikationsvorrichtung gehören;
wobei der Prozessor für Folgendes ausgelegt ist:
- auf den Empfang der Anfrage (Q) nach dem systemübergreifenden Bericht von einer der Telekommunikationsvorrichtungen hin: Evaluieren der Konfiguration zur Erkennung der einen oder der mehreren ausgewählten Datenbanken, die zu der Telekommunikationsvorrichtung gehören; und
- Verwenden der erkannten ausgewählten Quelldatenbanken zur Erzeugung einer für den Typ der Telekommunikationsvorrichtung spezifischen Version der Meta-Ansicht, wobei die für den Typ der Telekommunikationsvorrichtung spezifische Version der Meta-Ansicht dafür ausgelegt ist, Daten aus mindestens einer Datenbanktabelle der einen oder jeder der mehreren erkannten ausgewählten Quelldatenbanken abzurufen.

4. Datenbanksystem nach einem der vorangehenden Ansprüche,
- wobei die eine oder jede von den mehreren Datenbankansichten (122.A-122.C) ein Wurzelknoten eines hierarchischen Graphen untereinander verbundener Knoten ist; und
- wobei die untereinander verbundenen Knoten von jedem der hierarchischen Graphen eine oder mehrere von den Datenbanktabellen umfassen, deren Daten durch die Datenbankansicht, die als der Wurzelknoten agiert, abgerufen werden, nachdem sie aufgerufen worden ist, wobei die untereinander verbundenen Knoten von jedem der hierarchischen Graphen eine oder mehrere weitere Datenbankansichten umfassen, wobei jede von den weiteren Datenbankansichten dafür ausgelegt ist, Daten aus einer oder mehreren der Datenbanktabellen des hierarchischen Graphen abzurufen, nachdem sie von einer anderen der weiteren Datenbankansichten oder von der Wurzelknotenansicht des hierarchischen Graphen aufgerufen worden ist;
- wobei zumindest ein erster von den hierarchischen Graphen Datenbanktabellen umfasst, die jeweils als Knoten des ersten hierarchischen Graphen agieren, wobei die Datenbanktabellen in der In-Memory-Datenbank gespeichert sind und eine Kopie von Datenbanktabellen in einer der Quelldatenbanken darstellen; und
- wobei mindestens ein zweiter der hierarchischen Graphen Datenbanktabellen umfasst, die jeweils als Knoten des zweiten hierarchischen Graphen agieren, wobei die Datenbanktabellen in einer der Quelldatenbanken gespeichert sind, und wodurch die Daten, die aus den Datenbanktabellen abgerufenen werden, als Antwort auf einen an den Wurzelknoten des zweiten hierarchischen Graphen ergehenden Aufruf über das Telekommunikationsnetz aus den Datenbanktabellen abgerufen werden; und
- wobei das Aufrufen der einzelnen Datenbankansichten durch die Meta-Ansicht das Aufrufen der weiteren Datenbankansichten des hierarchischen Graphen auf kaskadische Weise, beginnend mit der Ausführung des Wurzelknotens, und das Rücksenden der abgerufenen Daten aus den Datenbanktabellen, die Knoten des hierarchischen Graphen darstellen, umfasst.

5. Datenbanksystem nach einem der vorangehenden Ansprüche,
- wobei jeder der Datenbankansichten Zugriffserlaubnisinformationen zugeordnet sind;
- wobei der Anfrage (Q) nach Erzeugung des systemübergreifenden Berichts eine Anwender-ID oder eine Gruppen-ID des Anwenders zugeordnet ist; und
- wobei das automatische Erzeugen der Meta-Ansicht umfasst: Evaluieren der Zugriffserlaubnisse, die den Datenbankansichten zugeordnet sind, die zu der einen oder den mehreren in der Konfiguration ausgewählten Quelldatenbanken gehören, und Erzeugen der Meta-Ansicht so, dass die erzeugte Meta-Ansicht dafür ausgelegt ist, auf einen Aufruf an die Meta-Ansicht hin, die Datenbankansichten, die zu der einen oder den mehreren in der Konfiguration ausgewählten Quelldatenbanken gehören und denen Zugriffserlaubnisinformationen zugeordnet sind, die angeben, dass der Anwender, dem die Anwender-ID oder Gruppen-ID zugeordnet ist, die Erlaubnis hat, auf die Datenbankansicht zuzugreifen, selektiv aufzurufen.

6. Datenbanksystem nach einem der vorangehenden Ansprüche, wobei das Erzeugen der Meta-Ansicht umfasst:
- innerhalb von jeder der Datenbankansichten, die einer der in der Konfiguration ausgewählten Quelldatenbanken zugeordnet sind: automatisch Erkennen einer Datenbank-Unterabfrage, die für folgendes ausgelegt ist:
∘ Abrufen von Daten aus einer der Quelldatenbanken über das Telekommunikationsnetz; oder
∘ Abrufen von Daten aus einer Kopie der einen Quelldatenbank, wobei die Kopie in der In-Memory-Datenbank gespeichert ist,
- Kombinieren der erkannten Unterabfragen zur Erzeugung einer kombinierten Datenbankabfrage, wobei die kombinierte Datenbankabfrage Teil der Programmlogik der Meta-Ansicht ist, wobei die Programmlogik dafür ausgelegt ist, den systemübergreifenden Bericht zu erstellen.

7. Datenbanksystem nach einem der vorangehenden Ansprüche, wobei jeder von den Quelldatenbanken, die in der Konfiguration ausgewählt sind, ein Datenbankschema (160.A-160.C) zugeordnet ist, gemäß dem die Daten, die in der Quelldatenbank enthalten sind, organisiert sind, wobei der Prozessor ferner für Folgendes ausgelegt ist:
- automatisch Evaluieren der Konfiguration zur Erkennung einer ersten ausgewählten (112.A) von den Quelldatenbanken, der ein erstes Schema (160.A) zugeordnet ist, und einer zweiten ausgewählten (112.B) von den Quelldatenbanken, der ein zweites Schema (160.B) zugeordnet ist, wobei die Spaltennamen des ersten Schemas ein Untersatz der Spaltennamen des zweiten Schemas sind.
- automatisch Erkennen von Spaltennamen von Tabellen der zweiten Quelldatenbank, die in dem zweiten Schema enthalten sind und die im ersten Schema nicht vorhanden sind;
- automatisch Erzeugen einer der Datenbankansichten, die dafür ausgelegt ist, Daten aus der zweiten Datenbanken abzurufen, durch:
∘ automatisch Erzeugen einer Kopie der Datenbankansicht, die dafür ausgelegt ist, Daten aus der erkannten ersten Quelldatenbank abzurufen;
∘ automatisch Modifizieren der Kopie, um zu bewirken, dass die modifizierte Programmlogik Daten aus der zweiten Quelldatenbank oder aus einer Kopie der zweiten Quelldatenbank, die in der In-Memory-Datenbank gespeichert ist, abruft, wodurch die Programmlogik der kopierten Datenbankansicht mit einer oder mehreren WÄHLEN-Bedingungen (312.A) ergänzt wird, in denen die erkannten Spaltennamen adressiert werden.

8. Datenbanksystem nach einem der vorangehenden Ansprüche, wobei der Prozessor für Folgendes ausgelegt ist:
- Empfangen von Kopien der Datenbanktabellen der Quelldatenbanken aus den Computersystemen;
- Speichern der empfangenen Kopien der Datenbanktabellen in der In-Memory-Datenbank;
- Ergänzen der kopierten Datenbanktabellen mit der einen von den Datenbankansichten, die dafür ausgelegt ist, Daten aus den kopierten Datenbanktabellen abzurufen, und Ergänzen der kopierten Datenbanktabellen mit weiteren Datenbankansichten, wobei die kopierten Datenbanktabellen, die eine Datenbankansicht und die weiteren Datenbankansichten einen hierarchischen Graphen untereinander verbundener Knoten darstellen, wobei die Datenbankansicht, die dafür ausgelegt ist, Daten aus den Kopien der Datenbanktabellen abzurufen, als Wurzelknoten des hierarchischen Graphen agiert.

9. Datenbanksystem nach Anspruch 8,
- wobei die Quelldatenbank mindestens zwei von den hierarchischen Graphen umfasst, die sich in ihrer Knotenstruktur und/oder Knotenzahl und/oder Knotentopologie voneinander unterscheiden; und
- wobei die Struktur aller Datenbankansichten (112) und die Struktur der Meta-Ansicht von einem gemeinsamen Datenbankschema (160) spezifiziert werden.

10. Datenbanksystem nach einem der vorangehenden Ansprüche, wobei der Prozessor dazu dient, die Meta-Ansicht automatisch unter Einbeziehung modifizierter Kopien von Datenbankabfrageanweisungen in die Programmlogik der Meta-Ansicht zu erzeugen, wobei die kopierten Datenbankabfrageanweisungen ursprünglich in der Programmlogik der Datenbankansichten enthalten sind, die dafür ausgelegt sind, Daten aus der einen oder den mehreren in der Konfiguration ausgewählten Quelldatenbanken abzurufen.

11. Datenbanksystem nach einem der vorangehenden Ansprüche, wobei der Prozessor dazu dient, die Datenbankansichten zu erzeugen und/oder die Meta-Ansicht zu erzeugen unter Verwendung einer Datenbankabfrageanweisung (311), die in einem In-Memory-DBMS implementiert ist, das die In-Memory-Datenbank betätigt.

12. Datenbanksystem nach einem der vorangehenden Ansprüche, wobei
- mindestens eine von den Datenbankansichten auf einen an sie ergangenen Aufruf hin die Daten aus den Kopien der Datenbanktabellen abruft, wobei die Kopien der Datenbanktabellen automatisch aus Datenbanktabellen von einer der Quelldatenbanken erzeugt und automatisch von der Quelldatenbank auf die In-Memory-Datenbank übertragen worden sind, und/oder
- mindestens eine weitere von den Datenbankansichten auf einen an sie ergangenen Aufruf hin die Daten aus Datenbanktabellen einer anderen von den Quelldatenbanken abruft, durch Zugreifen auf die Quelldatenbank, die auf einem der Computersysteme gehostet ist, über das Telekommunikationsnetz.

13. Computerimplementiertes Berichtserstellungsverfahren, umfassend:
- Bereitstellen eines vernetzten Datenbanksystems (100), das eine In-Memory-Datenbank (121) hostet, wobei das vernetzte Datenbanksystem über ein Telekommunikationsnetz (117) betriebsmäßig mit einer Vielzahl von Computersystemen (110.A-110.C) gekoppelt ist, wobei jedes Computersystem eine Quelldatenbank (112.A-112.C) umfasst, wobei die In-Memory-Datenbank für jede der Quelldatenbanken eine Datenbankansicht (122.A-122.C) umfasst, jede Datenbankansicht zu der Quelldatenbank gehört, jede Datenbankansicht Programmlogik umfasst, die dafür ausgelegt ist, als Antwort auf einen an sie ergangenen Aufruf einen Bericht für die Quelldatenbank zu erzeugen, wobei die Erzeugung des Berichts das Abrufen von Daten aus mindestens einer Datenbanktabelle umfasst, wobei die mindestens eine Datenbanktabelle in der Quelldatenbank gespeichert ist und/oder als Kopie einer Datenbanktabelle der Quelldatenbank in der In-Memory-Datenbank gespeichert ist;
- Modifizieren einer Auswahl einer oder mehrerer von den Quelldatenbanken einer Konfiguration (127) des vernetzten Datenbanksystems über eine Schnittstelle (115) durch eine tragbare, batteriebetriebene Telekommunikationsvorrichtung (120) eines Anwenders (101), wobei die Auswahl in der Konfiguration des vernetzten Datenbanksystems gespeichert ist, wobei jeder von den Quelldatenbanken, die in der Konfiguration ausgewählt sind, ein Datenbankschema (160.A-160.C) zugeordnet ist, wobei jedes Schema angibt, wie die in der Quelldatenbank enthaltenen Daten organisiert sind;
- automatisch Evaluieren der Konfiguration (127) zur Erkennung von zwei oder mehr der ausgewählten Quelldatenbanken, die ein Datenbankschema gemeinsam haben;
- automatisch Erkennen mindestens einer der Datenbankansichten, die dafür ausgelegt sind, Daten aus einer der durch das Evaluieren erkannten Quelldatenbanken abzurufen, und die im Augenblick der Evaluierung bereits in der In-Memory-Datenbank enthalten sind;
- automatisch Erkennen einer oder mehrerer der durch das Evaluieren erkannten Quelldatenbanken, für die der In-Memory-Datenbank eine entsprechende Datenbankansicht, die dafür ausgelegt ist, Daten aus der Quelldatenbank abzurufen, fehlt;
- automatisch Erzeugen der Datenbankansichten, die dafür ausgelegt sind, Daten aus der einen oder den mehreren erkannten Datenbanken abzurufen, durch:
▪ Erzeugen einer Kopie der Programmlogik der mindestens einen erkannten Datenbankansicht für die eine oder für jede von den mehreren erkannten Quelldatenbanken;
▪ Modifizieren der erzeugen Kopien, um zu bewirken, dass die modifizierte Programmlogik Daten aus der einen oder den mehreren erkannten Quelldatenbanken abruft;
- Empfangen einer Anfrage (Q) nach Erstellung eines systemübergreifenden Berichts (230) von der Telekommunikationsvorrichtung über das Telekommunikationsnetz, wobei der systemübergreifende Bericht Daten umfasst, die über mehreren der Quelldatenbanken gespeichert sind;
- als Antwort auf den Empfang der Anfrage: Evaluieren der Konfiguration zum automatischen Erzeugen einer Meta-Ansicht (126), wobei die Meta-Ansicht eine weitere Datenbankansicht der In-Memory-Datenbank ist und Programmlogik umfasst, die dafür ausgelegt ist, den systemübergreifenden Bericht zu erzeugen durch:
∘ selektives Aufrufen der Datenbankansichten, die zu den in der Konfiguration ausgewählten Quelldatenbanken gehören, auf einen an die Meta-Ansicht ergangenen Aufruf hin, wodurch selektiv Daten aus den ausgewählten Quelldatenbanken abgerufen werden, und
∘ Kombinieren der Daten, die durch die einzelnen aufgerufenen Datenbankansichten abgerufen werden, durch Ausführen einer Datenbankoperation, die von der In-Memory-DBMS bereitgestellt wird, um den systemübergreifenden Bericht bereitzustellen;
- als Antwort auf den Empfang der Anfrage: automatisches Erzeugen der Meta-Ansicht und Aufrufen der erstellten Meta-Ansicht zur Erstellung des systemübergreifenden Berichts; und
- Rücksenden einer Antwort (R) an die Telekommunikationsvorrichtung über das Telekommunikationsnetz, wobei die Antwort den erstellten systemübergreifenden Bericht umfasst.

14. Computerlesbares Medium (152), das Befehle umfasst, die bei ihrer Ausführung durch einen Prozessor (119) bewirken, dass der Prozessor ein Verfahren nach Anspruch 13 ausführt.

## Revendications

1. Système de base de données (100) en réseau comprenant :
- un processeur informatique (119) ;
- une base de données (121) en mémoire ;
- une interface de réseau (113) destinée au couplage de la base de données en mémoire à une pluralité de systèmes informatiques (110.A à 110.C) par le biais d'un réseau de communication (117), chacun desdits systèmes informatiques comprenant une base de données source (112.A à 112.C);
- une configuration (127) comprenant une sélection d'une ou de plusieurs parmi les bases de données sources, où chacune des bases de données sources choisie dans la configuration se voit associé un schéma de base de données (160.A à 160.C), chaque schéma étant indicateur de la manière dont les données contenues dans ladite base de données source sont organisées ;
- une interface (115) vers un dispositif de télécommunication (120) portable alimenté par batterie d'un utilisateur (101), l'interface permettant à l'utilisateur de modifier la sélection dans la configuration ;
dans lequel la base de données en mémoire comprend :
∘ pour chacune des bases de données sources (112.A à 112.C), une vue de base de données (122.A à 122.C) étant associée avec ladite base de données source, chaque vue de base de données comprenant une logique de programme conçue pour créer un rapport pour ladite base de données source associée en réponse au fait d'être appelée, la création du rapport comprenant une récupération de données à partir d'au moins un tableau de bases de données, l'au moins un tableau de bases de données étant stocké dans ladite base de données source et/ou étant stocké dans la base de données en mémoire sous forme d'une copie du tableau de bases de données de ladite base de données source ;
dans lequel le processeur est conçu pour :
- une évaluation de manière automatique de la configuration (127) afin d'identifier deux ou plus de bases de données sources sélectionnées partageant un schéma de bases de données commun ;
- une identification de manière automatique d'au moins une des vues de bases de données conçue pour la récupération de données à partir des bases de données sources identifiées dans ladite évaluation et étant déjà contenues dans la base de données en mémoire au moment de l'évaluation ;
- une identification de manière automatique d'une ou de plusieurs parmi les bases de données sources identifiées dans ladite évaluation pour laquelle la base de données en mémoire manque d'une vue de base de données respective conçue pour récupérer des données à partir de ladite base de données source ;
- la création de manière automatique des vues de bases de données conçues pour récupérer des données à partir de ladite une ou desdites plusieurs bases de données sources identifiées en :
• créant une copie de la logique de programme de chacune parmi la ou les bases de données sources identifiées ;
• modifiant les copies créées pour faire en sorte que la logique de programme modifiée récupère des données à partir de la ou des bases de données sources identifiées ;
- la réception d'une requête (Q) pour la génération d'un rapport inter-systèmes (230) à partir du dispositif de télécommunication par le biais du réseau de télécommunication (117), le rapport inter-systèmes comprenant des données stockés à travers de multiples bases parmi les bases de données sources ;
- en réponse à la réception de la requête, l'évaluation de la configuration pour la création automatique d'une méta vue (126), la méta vue étant une nouvelle vue de base de données de la base de données en mémoire, et la création de la méta vue, la méta vue comprenant une logique de programme pour créer le rapport inter-systèmes en
∘ appelant sélectivement, lorsque la méta vue est en cours d'appel, les vues de bases de données associées avec les bases de données sources choisies dans la configuration, récupérant ainsi des données à partir desdites bases de données sources sélectionnées, et
∘ en combinant, par l'exécution d'une opération sur la base de données mise en oeuvre dans un système de gestion de base de données DBMS en mémoire fonctionnant dans la base de données en mémoire, les données récupérées par chacune des vues de base de données appelées, procurant ainsi le rapport inter-systèmes ;
- en réponse à la réception de la requête, l'appel de manière automatique de la méta vue générée pour générer le rapport inter-systèmes ; et
- le retour d'une réponse (R) au dispositif de télécommunication (120) par le biais du réseau de télécommunication, la réponse comprenant le rapport inter-systèmes généré.

2. Système de base de données selon la revendication 1,
dans lequel le processeur est conçu pour :
- évaluer la requête (Q) du dispositif de télécommunication afin d'identifier une taille d'affichage estimée du dispositif de télécommunication ;
- modifier automatiquement la configuration, où plus la taille d'affichage estimée est grande, plus le nombre de bases de données sources sélectionnées dans la configuration modifiée est grand.

3. Système de base de données selon l'une quelconque des revendications précédentes,
- dans lequel le dispositif de télécommunication est un dispositif d'une pluralité de dispositifs de télécommunication étant respectivement couplés de manière opérationnelle à la base de données en mémoire par le biais du réseau de télécommunication ;
- dans lequel la configuration comprend, pour chacun des dispositifs de télécommunication, une spécification de la base ou des bases de données sources sélectionnées associées avec un type de dispositif dudit dispositif de télécommunication ;
dans lequel le processeur est conçu pour :
- lors de la réception de la requête (Q) pour le rapport inter-systèmes de l'un des dispositifs de télécommunication, évaluer la configuration pour identifier la ou les bases de données sources sélectionnées associées avec ledit dispositif de télécommunication ; et
- utiliser les bases de données sources sélectionnées identifiées afin de créer une version spécifique au type de dispositif de télécommunication de la méta vue, la version spécifique au type de dispositif de télécommunication de la méta vue étant configurée pour récupérer des données à partir d'au moins un tableau de bases de données de chacune parmi la ou les bases de données sources sélectionnées identifiées.

4. Système de base de données selon l'une quelconque des revendications précédentes,
- dans lequel chacune parmi la vue ou les vues de base de données (122.A à 122.C) est un noeud racine d'un graphe hiérarchique de noeuds interconnectés ; et
- dans lequel les noeuds interconnectés de chacun desdits graphes hiérarchiques comprennent un ou plusieurs tableaux de bases de données dont des données sont récupérées par la vue de base de données jouant le rôle de noeud racine lorsqu'elle est appelée, et où lesdits noeuds interconnectés de chacun desdits graphes hiérarchiques comprennent une ou plusieurs nouvelles vues de base de données, chacune desdites nouvelles vues de base de données étant configurée pour récupérer des données à partir dudit ou desdits tableaux de bases de données dudit graphe hiérarchique lorsqu'ils sont appelés par une autre desdites nouvelles vues de base de données ou par la vue du noeud racine dudit graphe hiérarchique ;
- dans lequel au moins un premier parmi les graphes hiérarchiques comprend des tableaux de bases de données jouant respectivement le rôle d'un noeud dudit premier graphe hiérarchique, où lesdits tableaux de bases de données sont stockés dans la base de données en mémoire et constituent une copie des tableaux de bases de données dans une des bases de données sources ; et
- dans lequel au moins un deuxième parmi les graphes hiérarchiques comprend des tableaux de bases de données jouant respectivement le rôle d'un noeud dudit deuxième graphe hiérarchique, où lesdits tableaux de bases de données sont stockés dans une des bases de données sources et ainsi les données récupérées à partir desdits tableaux de bases de données sont récupérées par le biais du réseau de télécommunication en réponse à un appel du noeud racine dudit deuxième graphe hiérarchique ; et
- dans lequel l'appel de chacune desdites vues de bases de données par la méta vue comprend l'appel des nouvelles vues de bases de données dudit graphe hiérarchique à la manière d'une cascade en commençant avec l'exécution du noeud racine, et en retournant les données récupérées des tableaux de bases de données constituant des noeuds dudit graphe hiérarchique.

5. Système de base de données selon l'une quelconque des revendications précédentes,
- dans lequel chacune des vues de base de données a une information de permission d'accès qui lui est attribuée ;
- dans lequel la requête (Q) pour générer le rapport inter-systèmes a un identifiant d'utilisateur ou un identifiant de groupe de l'utilisateur qui lui est attribué ; et
- dans lequel la création automatique de la méta vue comprend : une évaluation des permissions d'accès associées aux vues de bases de données associées avec la ou les bases de données sources sélectionnées dans la configuration, et la création de la méta vue de sorte que la méta vue générée est configurée pour appeler sélectivement, lorsque la méta vue est en train d'être appelée, les vues de bases de données associées avec la ou les bases de données sources choisies dans la configuration qui ont une information de permission d'accès attribuée indiquant que l'utilisateur ayant ledit identifiant d'utilisateur ou identifiant de groupe associé est autorisé à accéder à ladite vue de base de données.

6. Système de base de données selon l'une quelconque des revendications précédentes, dans lequel la création de la méta vue comprend :
- l'identification de manière automatique dans chacune des vues de bases de données associées à une des bases de données sources sélectionnée dans la configuration, d'une sous-requête de base de données, chaque sous-requête de base de données étant configurée pour :
∘ récupérer des données à partir de l'une des bases de données sources par le biais du réseau de télécommunication ; ou
∘ récupérer des données à partir d'une copie de ladite une base de données source, ladite copie étant stockée dans la base de données en mémoire,
- la combinaison des sous-requêtes identifiées pour générer une requête de base de données combinée, la requête de base de données combinée faisant partie de la logique de programme de la méta vue, ladite logique de programme étant configurée pour générer le rapport inter-systèmes.

7. Système de base de données selon l'une quelconque des revendications précédentes, dans lequel chacune des bases de données sources sélectionnée dans la configuration a un schéma de base de données (160.A à 160.C) qui lui est associé, selon lequel les données contenues dans ladite base de données source sont organisées, le processeur étant en outre configuré pour :
- évaluer de manière automatique la configuration pour identifier une première base sélectionnée (112.A) des bases de données sources ayant un premier schéma (160.A) associé et une deuxième base sélectionnée (112.B) des bases de données sources ayant un deuxième schéma (160.B) associé, où les noms de colonnes du premier schéma sont un sous-ensemble des noms de colonnes du deuxième schéma ;
- identifier de manière automatique des noms de colonnes de tableaux de la deuxième base de données source qui sont contenus dans le deuxième schéma étant absent du premier schéma ;
- créer de manière automatique une des vues de base de données configurée pour récupérer des données à partir de la deuxième base de données source en :
∘ créant de manière automatique une copie de la vue de la base de données configurée pour récupérer des données à partir de ladite première base de données source identifiée ;
∘ modifiant de manière automatique ladite copie pour faire en sorte que la logique de programme modifiée récupère des données à partir de la deuxième base de données source ou à partir d'une copie de ladite deuxième base de données source stockée dans la base de données en mémoire, et ainsi compléter la logique de programme de la vue de base de données copiée avec une ou plusieurs clauses SELECT (312.A) s'adressant aux noms de la colonne identifiée.

8. Système de base de données selon l'une quelconque des revendications précédentes, dans lequel le processeur est configuré pour :
- la réception de copies des tableaux de bases de données des bases de données sources à partir de systèmes informatiques ;
- le stockage de chacune des copies de tableau de base de données reçues dans la base de données en mémoire ;
- compléter les tableaux de bases de données copiées avec une des vues de base de données configurée pour récupérer des données à partir desdits tableaux de base de données copiés et compléter les tableaux de bases de données copiés avec de nouvelles vues de bases de données, où les tableaux de bases de données copiés, ladite une vue de base de données et les nouvelles vues de base de données constituent un graphe hiérarchique de noeuds interconnectés, où la vue de base de données configurée pour récupérer des données à partir de copies de tableaux de bases de données joue le rôle de noeud racine dudit graphe hiérarchique.

9. Système de base de données selon la revendication 8,
- dans lequel la base de données source comprend au moins deux des graphes hiérarchiques dont la structure de noeud et/ou le nombre de noeuds ou la topologie des noeuds diffèrent les uns des autres ; et
- dans lequel la structure de toutes les vues de bases de données (112) et la structure de la méta vue sont spécifiées par un schéma de base de données (160) partagé.

10. Système de base de données selon l'une quelconque des revendications précédentes, dans lequel le processeur permet de générer automatiquement la méta vue en indiquant des copies modifiées d'états de requêtes de base de données dans la logique de programme de la méta vue, les états de requête de base de données copiés étant à l'origine contenus dans la logique de programme des vues de base de données configurées pour récupérer des données à partir de la ou des bases de données sources choisies dans la configuration.

11. Système de base de données selon l'une quelconque des revendications précédentes, dans lequel le processeur permet de générer les vues de bases de données et/ou de générer la méta vue en utilisant un état de requête de base de données (311) mis en oeuvre dans un système DBMS en mémoire fonctionnant dans la base de données en mémoire.

12. Système de base de données selon l'une quelconque des revendications précédentes, dans lequel
- au moins une des vues de base de données, lors de l'appel, récupère les données à partir de copies de tableaux de bases de données, les copies de tableaux de bases de données ayant été automatiquement créées à partir de tableaux de bases de données de l'une des bases de données sources et ayant été automatiquement transférées à partir de ladite base de données source vers la base de données en mémoire ; et/ou
- au moins une nouvelle parmi les vues de bases de données lors de l'appel récupère les données à partir des tableaux de bases de données d'une autre parmi les bases de données sources en accédant à ladite base de données source hôte de l'un des systèmes informatiques par le biais du réseau de télécommunication.

13. Procédé d'établissement d'un rapport mis en oeuvre par ordinateur, comprenant :
- la fourniture d'un système de base de données (100) en réseau étant l'hôte d'une base de données en mémoire (121), le système de base de données en réseau étant couplé opérationnellement, par le biais d'un réseau de télécommunication (117) à une pluralité de systèmes informatiques (110.A à 110.C), chaque système informatique comprenant une base de données source (112.A à 112.C), où la base de données en mémoire comprend, pour chacune des bases de données sources, une vue de base de données (122.A à 122.C), chaque vue de base de données étant associée avec ladite base de données source, chaque vue de base de données comprenant une logique de programme configurée pour créer un rapport pour ladite base de données source en réponse à son appel, la création du rapport comprenant une récupération de données à partir d'au moins un tableau de bases de données, l'au moins un tableau de bases de données étant stocké dans ladite base de données source et/ou étant stockée dans la base de données en mémoire sous forme d'une copie d'un tableau de bases de données de ladite base de données source ;
- la modification, par un dispositif de télécommunication (120) portable alimenté par batterie d'un utilisateur (101), par le biais d'une interface (115), d'une configuration (127) du système de base de données en réseau, une sélection d'une ou de plusieurs parmi les bases de données sources, la sélection étant stockée dans la configuration du système de base de données en réseau, où chacune des bases de données sources sélectionnée dans la configuration a un schéma de base de données (160.A à 160.C) associé, chaque schéma étant indicateur de la manière dont les données contenues dans ladite base de données source sont organisées ;
- l'évaluation de manière automatique de la configuration (127) pour identifier deux ou plus parmi les bases de données sources sélectionnées partageant un schéma de base de données commun ;
- l'identification de manière automatique d'au moins une des vues de bases de données conçue pour la récupération de données à partir des bases de données sources identifiées dans ladite évaluation et étant déjà contenues dans la base de données en mémoire au moment de l'évaluation ;
- l'identification de manière automatique d'une ou plusieurs parmi les bases de données sources identifiées dans ladite évaluation pour laquelle la base de données en mémoire manque d'une vue de base de données respective conçue pour récupérer des données à partir de ladite base de données source ;
- la création de manière automatique des vues de bases de données conçues pour récupérer des données à partir de ladite une ou desdites plusieurs bases de données sources identifiées en :
• créant une copie de la logique de programme de chacune parmi la ou les bases de données sources identifiées pour chacune parmi la ou les bases de données sources identifiées ;
• modifiant les copies créées pour faire en sorte que la logique de programme modifiée récupère des données à partir de la ou des bases de données sources identifiées ;
- la réception d'une requête (Q) pour la génération d'un rapport inter-systèmes (230) à partir du dispositif de télécommunication par le biais du réseau de télécommunication, le rapport inter-systèmes comprenant des données stockées à travers de multiples bases parmi les bases de données sources ;
- en réponse à la réception de la requête, l'évaluation de la configuration pour la création automatique d'une méta vue (126), la méta vue étant une nouvelle vue de base de données de la base de données en mémoire, et comprenant une logique de programme conçue pour créer le rapport inter-systèmes en :
∘ appelant sélectivement, lorsque la méta vue est en cours d'appel, les vues de base de données associées avec les bases de données sources choisies dans la configuration, récupérant ainsi des données à partir desdites bases de données sources sélectionnées, et
∘ en combinant, par l'exécution d'une opération sur la base de données fournie par la base de données en mémoire, les données récupérées par chacune des vues de base de données appelées, pour procurer le rapport inter-systèmes ;
- en réponse à la réception de la requête, la création de manière automatique de la méta vue et l'appel de la méta vue générée pour générer le rapport inter-systèmes ; et
- le retour d'une réponse (R) au dispositif de télécommunication par le biais du réseau de télécommunication, la réponse comprenant le rapport inter-systèmes généré.

14. Support lisible par ordinateur (152) comprenant des instructions qui, lorsqu'elles sont exécutées par un processeur (119), font en sorte que le processeur exécute un procédé selon la revendication 13.
